# EUROPEAN PATENT APPLICATION

(11) **EP 3 251 878 A1**
(43) Date of publication of application: **06.12.2017**
(21) Application number: 16171969.5
(22) Date of filing: 30.05.2016
(51) Int. Cl.: B60D 1/02, B60D 1/62

(54) **TRAILER COUPLING WITH MAGNETIC ANGULAR SENSOR**

(71) Applicant: VBG Group AB (Publ), 462 28 Vänersborg (SE)
(72) Inventor: Svensson, Bolennarth, 462 28 Vänersborg (SE)
(74) Representative: Awapatent AB

(57) **Abstract**

A trailer coupling comprising a towing coupling part (2), a trailer coupling part (3) and an angular sensing arrangement configured to detect an angle (α) between the trailer coupling part and the towing coupling part. The angular sensing arrangement includes at least one magnet (6; 6') for inducing a static magnetic vector field in a magnetic circuit including at least part of the towing coupling part, at least part of the trailer coupling part, and an air gap (5) there between, and at least one magnetic field sensor (7) mounted on the coupling part, configured to detect changes in the static magnetic vector field caused by changes in relative position between the towing coupling part and the trailer coupling part.

## Description

### Field of the invention

The present invention relates to a trailer coupling, i.e. a coupling between a towing vehicle and a trailer. More specifically, the invention relates to detection of an angle between the towing vehicle coupling part and the trailer coupling part.

### Background of the invention

During normal driving, a trailer is typically pulled straight behind the towing vehicle, and the longitudinal axis of the trailer coupling part will be aligned with the longitudinal axis of the towing coupling part. In other words, there is no or at least only a very small angle formed between these axes.

However, when passing a sharp corner, or when reversing (backing up), there is sometimes a significant angle formed between the towing coupling part and the trailer coupling part. In some situations, this angle is as large as 90 degrees or more.

If this angle becomes too large, there is a risk that the trailer coupling part (e.g. a draw bar) will be brought into contact with the outer edge of the towing coupling part (e.g. a coupling mouth). Such contact may seriously damage the coupling, and it is therefore generally desired to avoid too large angles between the towing coupling part and the trailer coupling part. Further, there may be a risk that the outer parts of the trailer (i.e. the front corners of the trailer) are brought into contact with the rear part of the towing vehicle, potentially damaging the trailer and towing vehicle.

Several attempts have been made to detect and monitor this angle, and provide information to the operator of the towing vehicle. For example, DE 10 2014 212 821 discloses a solution employing two electromagnetic field transmitters mounted on the corners of the trailer, and a receiver mounted on the towing vehicle. By detecting the relative strength of the fields from the two transmitters, the angle of the trailer can be determined. Another solution is provided by DE 101 22 562, in which an ultrasound transceiver is arranged on the towing vehicle, and one or several reflectors are arranged one the trailer. The angle can be determined based on the reflected signal.

Available solutions are require relatively expensive components, and are not very robust.

Further, Dynamic Vehicle Control Systems (DVCS) (e.g. anti-skid systems) have successfully been developed for single vehicles and are often provided in cars and trucks. However, conventional DVCS-systems only take into account the vehicle on which they are installed. In the case of a towing vehicle and one or several trailers, there is sometimes a limited functionality DVCS on the trailer, but it does not take the towing vehicle or other trailers into account. In order to enable a DVCS that can take the entire combination of vehicles into account, it becomes extremely important to accurately measure also small angles between the towing vehicle and trailers. When the angle becomes too large, it is typically no longer possible to correct the deviation and avoid a skid.

Existing angular sensing systems to not provide sufficiently accurate and robust angular detection for such DVCS implementations.

### General disclosure of the invention

It is an object of the present invention to provide an alternative and improved angular sensor for detecting the angle between towing coupling part and trailer coupling part in a trailer coupling.

This and other objects are achieved by a trailer coupling for connecting a trailer to a towing vehicle, the coupling comprising a towing coupling part mounted at the back of the towing vehicle and being adapted to receive a trailer coupling part fixed to the trailer, and a locking mechanism being adapted to fix the trailer coupling part to the towing coupling part so as to secure the mechanical connection of the trailer to the towing vehicle. The trailer coupling further comprises an angular sensing arrangement, configured to detect an angle between the trailer coupling part and the towing coupling part, the angular sensing arrangement including a magnet for inducing a static magnetic vector field in a magnetic circuit including at least part of the towing coupling part, at least part of the trailer coupling part, and an air gap there between, and a magnetic field sensor mounted on the coupling part, configured to detect changes in the static magnetic vector field caused by changes in relative position between the towing coupling part and the trailer coupling part.

With this design, a simple and cost efficient yet robust angular sensor is provided. The invention is based on the realization that a static magnetic vector field can be induced in a circuit including at least part of the towing coupling part and at least part of the trailer coupling part. When the coupling parts move, the magnetic circuit will be altered, and the magnetic field sensor will be able to detect a change in direction of the vector field. More specifically, the sensor will detect the direction of the magnetic field in the air gap between the towing coupling part and the trailer coupling part.

The angular sensing arrangement according to the present invention is capable of detecting also small angles (in the order of 1 degree) with high precision and accuracy. This makes the sensing arrangement particularly suitable for use in a Dynamic Vehicle Control System (DVCS).

The angle between the coupling parts typically lies in the plane of the road (or in the plane of the towing vehicle when standing on the road). In most cases, this is a horizontal, or close to horizontal plane. However, the angular sensor arrangement is not limited to such angles. Any angular movement between the coupling parts that causes a change in the static magnetic field in a direction which is detectable by the sensor, may be detected. It is noted that for reasons of economy, the sensor may be restricted to detect changes in the static magnetic field only in some directions, e.g. directions corresponding to angular movement in the plane of the road.

The angular sensing arrangement may further comprise processing circuitry connected to the sensor and configured to determine said angle based on the detected changes in the static magnetic vector field. With this design, the output from the angular sensor arrangement can be a signal directly proportional to the detected angle, facilitating further processing (e.g. in a user interface).

The magnet may be mounted on the trailer coupling part. In this case, the magnet and sensor will be move relative to each other when the coupling parts move, making changes in the magnetic circuit and the static field more distinguishable.

However, the magnet may alternatively be mounted on the towing coupling part. In this case, all parts of the angular sensor arrangement are mounted on the towing coupling part. This means that the sensor and magnet will not move relative each other and the only changes in the magnetic field are caused by changes in the magnetic circuit (i.e. the trailer coupling part moving). These changes may be less significant, and more difficult (but not impossible) to detect. However, it also makes the invention applicable to existing trailers without any need for adaptation.

The magnet may be any magnet capable of inducing a static magnetic field. In some applications, the magnet is a permanent magnet, while in other applications, the magnet is a DC electromagnet. An electromagnet may be preferred in cases where a stronger magnetic field is required, but will require some type of electrical power.

The sensing arrangement may include more than one magnet. By including more than one magnet, more freedom is available when determining the magnetic circuit. For example, the magnetic circuit may extend over a larger area, include larger portions of the coupling parts and be designed for even better dynamics in the sensor output. The function of the sensor remains essentially unchanged.

The sensing arrangement may also include more than one sensor. By including more than one sensor, even larger accuracy and robustness may be obtained. However, the determination of the actual angle will be more complex, as it will be based on sensor data from more than one sensor.

The invention is applicable to a trailer coupling where the towing coupling part is a coupling mouth and the trailer coupling part is a coupling eye of a drawbar. It is also applicable to a trailer coupling where the towing coupling is a fifth wheel coupling, and the trailer coupling part is a king pin.

### Brief description of the drawings

The present invention will be described in more detail with reference to the appended drawings, showing currently preferred embodiments of the invention.

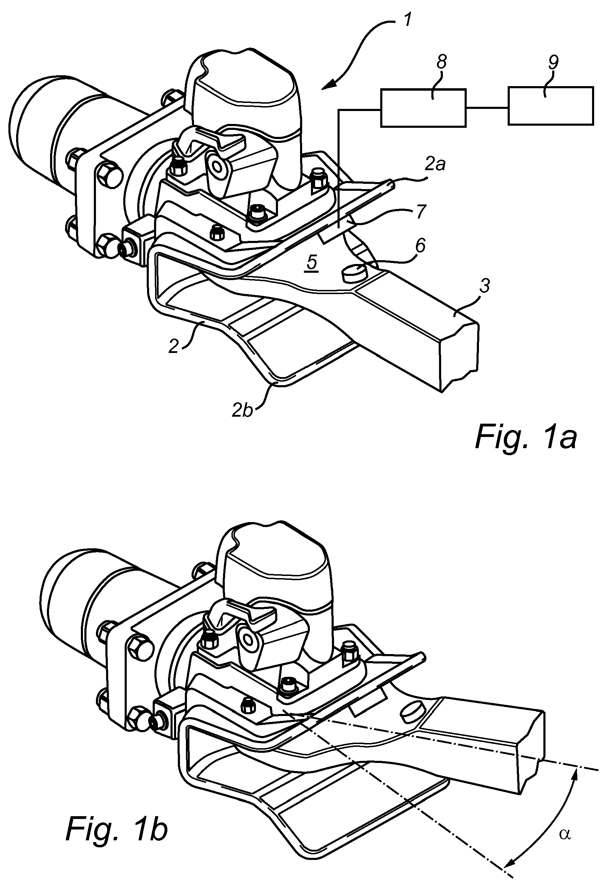

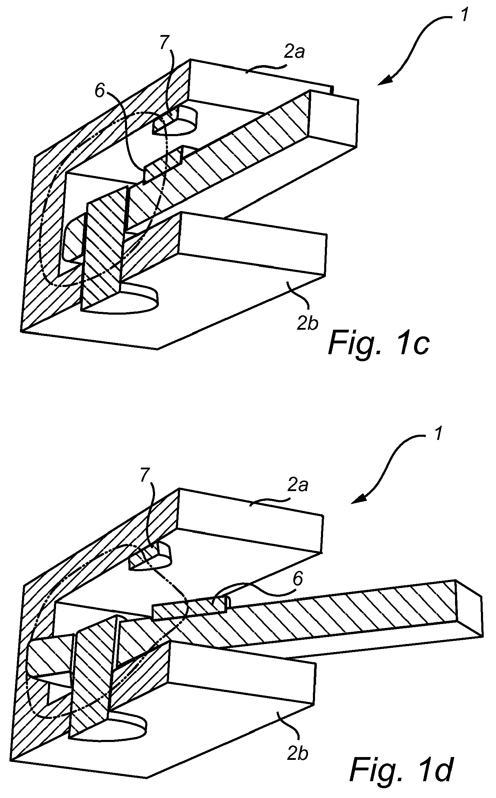

Figure 1 a schematically shows a trailer coupling provided with a sensor arrangement according to a first embodiment of the invention, in a first angular position.
Figure 1 b shows the coupling in figure 1 a in a second angular position.
Figures 1 c and 1 d show schematic illustrations of the magnetic vector field in figures 1 a and 1 b.
Figure 2a schematically shows a trailer coupling provided with a sensor arrangement according to a first embodiment of the invention, in a first angular position.
Figure 2b shows the coupling in figure 2a in a second angular position.
Figures 2c and 2d show schematic illustrations of the magnetic vector field in figures 2a and 2b.
Figure 3 shows a diagram of the components of the static magnetic field induced by the magnet in figure 1 a-1 b, as the draw bar is turned.

### Detailed description of preferred embodiments

The trailer coupling 1 in figure 1 is of the type which has a towing coupling part mounted on a towing vehicle, a trailer coupling part mounted on a trailer, and a locking device which is arranged to mechanically connect the coupling parts. In the illustrated example, the towing coupling part is in the form of a coupling mouth 2 and the trailer coupling part is in the form of a draw bar 3. The draw bar 3 has an eye, which is inserted into the mouth 2, after which a king pin (not shown) is pushed vertically down through the eye to mechanically hold the draw bar 3 in place in the mouth 2. The king pin may be operated manually or e.g. by hydraulic force.

An angular sensing arrangement includes a magnet 6 mounted on the draw bar 2, and a magnetic vector field sensor 7 mounted on the upper lip 2a of the mouth 2. As illustrated very schematically in figure 1 a, the sensing arrangement here also includes processing circuitry 8, which is connected to receive a sensor signal from the sensor 7 and configured to determine, based on this sensor signal, an angle α between the draw bar 3 and the mouth 2. The circuitry may further be connected to a user interface 9 e.g. provided in the driving compartment of the towing vehicle.

The magnet 6 is configured to induce a static magnetic field in a magnetic circuit comprising a part of the draw bar 3, a part of the mouth 2, and an air gap 5 there between. The magnet is here a permanent magnet, and thus requires no electrical power.

The sensor 7 is any suitable sensor capable of detecting a magnetic vector field. Several different types of such sensors are available, including magnetoresistive sensors based on e.g. a Wheatstone bridge and Hall Effect sensors. Sometimes they are combined with micro-gyros, such as micro electro mechanical sensors (MEMS). Various types of magnetic field sensors are commercially available from several suppliers, and used e.g. as compasses and displacement sensors.

The sensor 7 may be configured to detect magnetic vector fields in all three dimensions, making it capable of detecting any change in the static magnetic field. Alternatively, the sensor 7 is configured to detect magnetic vector fields in only one plane, or even in only one direction.

The magnetic vector field created in figure 1 a is schematically illustrated in figure 1c. As the draw bar 3 is positioned centrally in the coupling mouth 2, the vector field will essentially be aligned with the plane of symmetry of the trailer coupling 1. As the sensor 7 here is positioned in the plane of symmetry and the magnetic vector field through the sensor will be directed substantially in this plane.

When the draw bar 3 is turned with respect to the coupling mouth 2, as indicated in figure 1 b, this will cause a change in the magnetic circuit (more specifically in the air gap 5 of the circuit), leading to a change in the static magnetic field detected by the sensor 7.

The magnetic vector field created in figure 1 b is schematically illustrated in figure 1 c. As the draw bar 3 now is positioned to the side of the coupling mouth 2, the vector field is no longer aligned with the plane of symmetry, but be skewed to one side. The magnetic vector field through the sensor will therefore have a component outside the plane of symmetry.

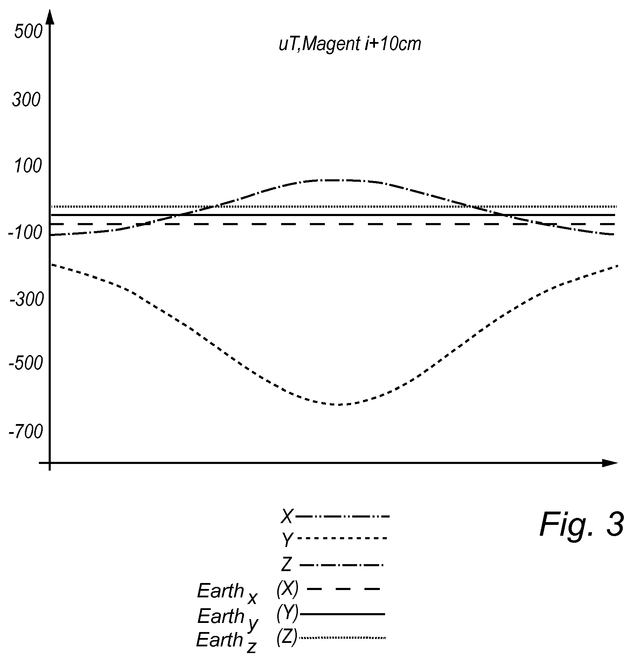

Figure 3 shows an example of a plot of three components (x, y, z) of a magnetic field, as the relative position of the magnet 6 and sensor 7 is changed. From detection of these components, the angular position of the magnet with respect to the sensor can be determined.

In order to enable detection of these changes in the static field, they need to be distinguishable from the earth's magnetic field. The three components of the earth field are also indicated in figure 3. In this example the permanent magnet has been chosen such that the induced magnetic field is in the order of 100 µT, which is at least an order of magnitude greater than the earth field. It is noted that this field strength is only an example. The required field strength in a given implementation will be determined by the magnetic circuit and the accuracy of the sensor. Also, the processing circuitry 8 may be configured to apply various types of filtering of the detection, making it possible to distinguish also relatively weak static fields from the earth magnetic field.

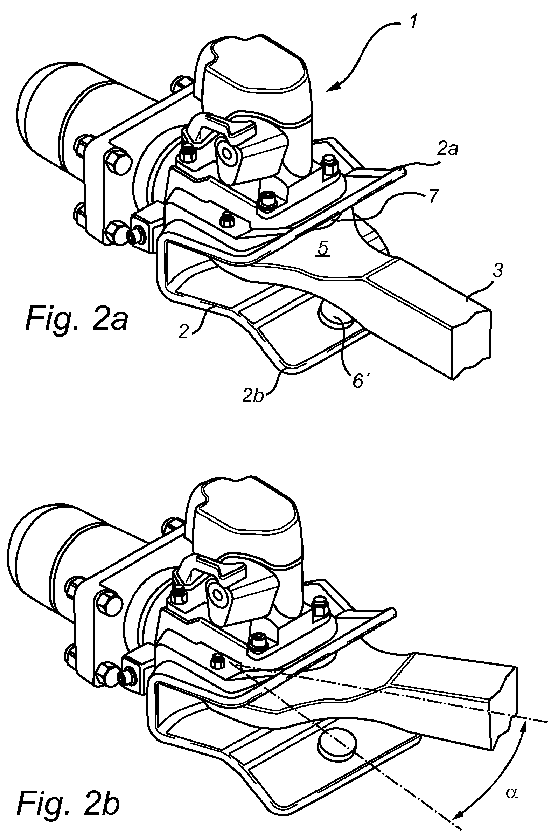

Figure 2a and 2b show the same type of coupling as in figure 1. In this case, however, the angular sensing arrangement has a magnet 6' mounted on the lower lip 2b of the coupling mouth 2.

The magnet 6' will here induce a magnetic vector field in a circuit that passes from the magnet 6' through a first air gap 11, part of the draw bar 3, a second air gap 12, and finally part of the mouth 2.

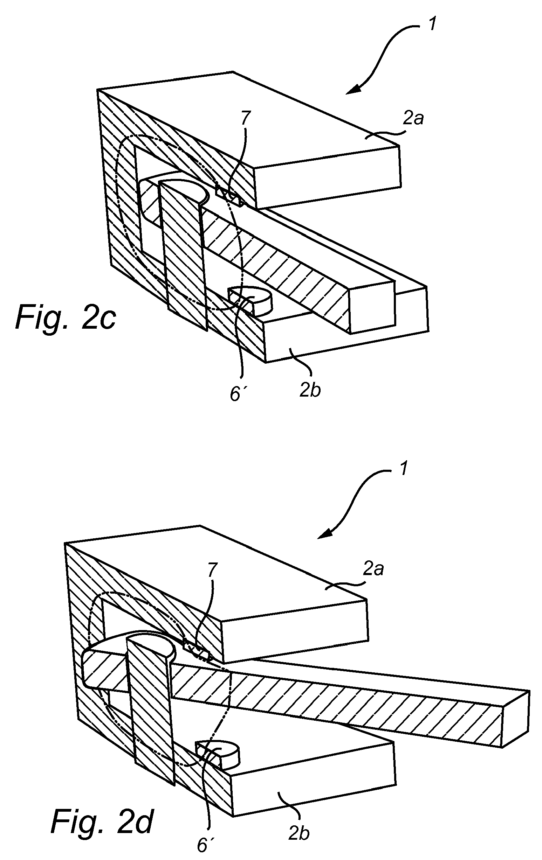

Figure 2c and 2d show the magnetic vector field generated by the magnet 6'. Similar to figure 1 c, the vector field in figure 2c is aligned with the plane of symmetry. And similar to figure 1 d, the vector field in figure 2d is skewed to one side. It should be noted that the change of the static vector field in figure 1 d is caused despite the fact that the magnet 6' is not moved.

In this case, no component of the sensor arrangement is mounted on the drawbar, making the arrangement very flexible. However, in figure 2 the magnet 6' and the sensor 7 will not move relative each other when the draw bar moves with respect to the coupling mouth. Changes in the static magnetic field will therefore be weaker. As a consequence, a more powerful magnet may be required, and the magnet 6' is here a DC electromagnet, powered by the towing vehicle's power system (not shown).

The person skilled in the art realizes that the present invention by no means is limited to the preferred embodiments described above. On the contrary, many modifications and variations are possible within the scope of the appended claims. For example, more than one magnet, or more than one sensor may be included in all embodiments discussed above, if that is considered advantageous.

## Claims

1. A trailer coupling for connecting a trailer to a towing vehicle, the coupling comprising:
a towing coupling part (2) mounted at the back of the towing vehicle and being adapted to receive a trailer coupling part (3) fixed to the trailer, and
a locking mechanism being adapted to fix the trailer coupling part to the towing coupling part so as to secure the mechanical connection of the trailer to the towing vehicle, **characterized by**
an angular sensing arrangement, configured to detect an angle (α) between the trailer coupling part and the towing coupling part, said angular sensing arrangement including:
at least one magnet (6; 6') for inducing a static magnetic vector field in a magnetic circuit including at least part of the towing coupling part, at least part of the trailer coupling part, and an air gap (5) there between, and
at least one magnetic field sensor (7) mounted on the coupling part, configured to detect changes in said static magnetic vector field caused by changes in relative position between the towing coupling part and the trailer coupling part.

2. The trailer coupling according to claim 1, wherein the angular sensing arrangement further comprises processing circuitry (8) connected to the sensor(s) (7) and configured to determine said angle based on the detected changes in the static magnetic vector field.

3. A trailer coupling according to claim 1 or 2, wherein the magnet(s) (6) is/are mounted on the trailer coupling part (3).

4. A trailer coupling according to claim 1 or 2, wherein the magnet(s) (6') is/are mounted on the towing coupling part.

5. A trailer coupling according to any one of the preceding claims, wherein the angular sensing arrangement includes at least two magnets.

6. A trailer coupling according to any one of the preceding claims, wherein the angular sensing arrangement includes at least two sensors.

7. A trailer coupling according to any one of the preceding claims, wherein at least one magnet is a permanent magnet.

8. A trailer coupling according to one of claims 1 - 6, wherein at least one magnet is a DC electromagnet.

9. A trailer coupling according to any one of the preceding claims, wherein the towing coupling part (2) is a coupling mouth and the trailer coupling part (3) is a coupling eye of a drawbar.
